# FASCICULE DE BREVET EUROPEEN

(11) **EP 3 990 765 B1**
(45) Date de publication et mention de la délivrance du brevet: **09.08.2023**
(21) Numéro de dépôt: 20785784.8
(22) Date de dépôt: 19.06.2020
(51) Int. Cl.: F02C 7/277, F01D 25/20

(54) **TURBOMACHINE D'AERONEF COMPORTANT DES MOYENS D'AMORÇAGE DE LA POMPE DE LUBRIFICATION**
TURBOMASCHINE EINES FLUGZEUGS MIT MITTEL ZUM ANSAUGEN DER SCHMIERPUMPE
AIRCRAFT TURBOMACHINE COMPRISING MEANS FOR PRIMING THE LUBRICATING PUMP

(30) Priorité: 25.06.2019 FR 1906906
(43) Date de publication de la demande: 04.05.2022
(73) Titulaire: SAFRAN AIRCRAFT ENGINES, 75015 Paris (FR)
(72) Inventeur: FERT, Jérémy, Edmond, 77550 MOISSY-CRAMAYEL (FR); COTEREAU, Nicolas Vincent Pierre-Yves, 77550 MOISSY-CRAMAYEL (FR)
(74) Mandataire: Brevalex
(86) Numéro de dépôt international: PCT/FR2020/051070
(87) Numéro de publication internationale: WO 2020/260808

(56) Documents cités:
- WO-A1-2013/180939
- GB-A- 1 053 264

## Description

### DOMAINE TECHNIQUE

L'invention concerne une turbomachine d'aéronef comportant un circuit de lubrification et des moyens d'amorçage de la pompe.

L'invention concerne plus particulièrement une turbomachine d'aéronef comportant un conduit pneumatique pour l'amorçage de la pompe au démarrage de la turbomachine.

### ÉTAT DE LA TECHNIQUE ANTÉRIEURE

Une turbomachine d'aéronef comporte notamment un circuit de lubrification permettant d'alimenter en liquide de lubrification différents composants de la turbomachine.

Ce circuit de lubrification comporte notamment un réservoir dans lequel le liquide de lubrification est stocké et une pompe prélevant le liquide de lubrification pour l'envoyer vers les composants à lubrifier.

Le réservoir est généralement disposé dans le compartiment FAN, c'est-à-dire un compartiment entourant la soufflante de la turbomachine.

La pompe est quant à elle disposée à proximité d'un boitier d'entrainement des accessoires, dans un compartiment central de la turbomachine, communément appelé compartiment "core".

Pour relier la pompe au réservoir, le circuit de lubrification comporte un conduit d'aspiration qui est raccordé au réservoir et à un orifice d'aspiration de la pompe.

Ce conduit d'aspiration s'étend dans la turbomachine en traversant un bras structural, dont la fonction principale est de soutenir le compartiment central de la turbomachine. Une turbomachine d'aéronef peut comporter principalement deux bras structuraux disposés à 6h et à 12h, c'est-à-dire verticalement par rapport à la gravité terrestre au-dessous et au-dessus du compartiment central, respectivement.

Selon un mode de réalisation connu, le conduit d'aspiration traverse un bras de support situé à 6h, c'est-à-dire qui est situé verticalement au-dessous du compartiment central. Lorsque la turbomachine est à l'arrêt, le liquide de lubrification repose naturellement dans le conduit d'aspiration, sous l'effet de la gravité terrestre. Il n'y a alors aucun problème d'amorçage de la pompe lors du démarrage.

Cependant, dans d'autres configurations de turbomachines, il n'est pas possible d'utiliser un bras de support (aussi appelé bifurcation) situé à 6h pour le passage du conduit d'aspiration, en particulier si la turbomachine ne comprend pas une telle bifurcation. C'est le cas par exemple d'une turbomachine dont la nacelle comprend un inverseur de poussée de technologie dite « O-Duct » qui par conception ne comprend pas de bifurcation à 6h. Le conduit d'aspiration reliant la pompe au réservoir doit alors passer au travers du bras de support situé à 12h.

Il en résulte qu'à l'arrêt, le conduit d'aspiration se vide du liquide de lubrification sous l'action de la gravité terrestre, vers le réservoir et/ou vers la pompe.

Lors d'un redémarrage de la turbomachine, la pompe doit fournir un effort d'aspiration important pour réamorcer le conduit d'aspiration du fait de la hauteur à franchir par le liquide. La différence de niveau entre le réservoir et le point le plus haut du conduit d'aspiration est par exemple de l'ordre de 2m.

La pompe n'est généralement pas dimensionnée pour fournir cet effort d'aspiration, puisque dans les autres phases de fonctionnement de la turbomachine, la pompe fournit un effort moins important Les documents GB1053264A et WO2013/180939A1 divulguent des turbomachines comprenant des systèmes de lubrification de l'art antérieur.

L'invention a pour but de proposer une turbomachine d'aéronef comportant des moyens pour réamorcer le conduit d'aspiration lors d'une phase de démarrage de la turbomachine, pour permettre de lubrifier rapidement les composants de la turbomachine.

### EXPOSÉ DE L'INVENTION

L'invention propose une Turbomachine d'aéronef comportant un circuit de lubrification comprenant notamment un réservoir de liquide de lubrification, une pompe prélevant du liquide de lubrification depuis le réservoir pour l'injecter vers plusieurs composants de la turbomachine et un conduit d'aspiration reliant le réservoir à un orifice d'aspiration de la pompe,
la turbomachine comportant en outre un circuit pneumatique de démarrage comportant un tube de démarrage dans lequel circule un flux d'air comprimé destiné à alimenter un démarreur pneumatique de la turbomachine,
caractérisée en ce qu'elle comporte un conduit pneumatique s'étendant depuis le tube de démarrage jusqu'au réservoir pour alimenter le réservoir en air comprimé, afin de faire circuler le liquide de lubrification au travers du conduit d'aspiration en direction de la pompe lors du démarrage de la turbomachine.

Le circuit d'air comprimé est une source d'air sous pression qui est disponible très rapidement. Ainsi, lors de la phase de démarrage, cette source d'air sous pression est utilisée pour pressuriser le réservoir, permet de réamorcer rapidement le conduit d'aspiration, elle ainsi permet d'alimenter rapidement la pompe.

De préférence, la turbomachine comporte une vanne de démarrage disposée sur le tube de démarrage et comportant un piquage au niveau duquel le conduit pneumatique est raccordé au tube de démarrage, le piquage étant situé sur le tube de démarrage en amont de la vanne de démarrage.

De préférence, la turbomachine comporte une vanne supplémentaire disposée sur le conduit pneumatique.

De préférence, la turbomachine comporte une vanne de démarrage disposée sur le tube de démarrage et un piquage au niveau duquel le conduit pneumatique est raccordé au tube de démarrage, le piquage étant situé sur le tube de démarrage en aval de la vanne de démarrage.

De préférence, la turbomachine comporte un limiteur de pression situé dans le conduit pneumatique, afin de limiter la pression d'air dans le réservoir au démarrage.

De préférence, la turbomachine comporte un compartiment central coaxial à un axe principal A de la turbomachine, un compartiment de soufflante s'étendant autour et à distance du compartiment central et coaxialement à l'axe principal A et des bras structuraux, s'étendant radialement par rapport à l'axe principal A et verticalement selon la direction de la gravité terrestre, les bras structuraux étant répartis verticalement de part et d'autre du compartiment central et reliant mécaniquement le compartiment central au compartiment de soufflante, dans laquelle le conduit d'aspiration s'étend au travers d'un bras structural situé verticalement au-dessus du compartiment central.

De préférence, la pompe est montée sur le compartiment central et le réservoir est monté sur le compartiment de soufflante.

L'invention concerne aussi un procédé de démarrage d'une turbomachine selon l'invention, comportant une pompe de liquide de lubrification, un réservoir de liquide de lubrification relié à la pompe par un conduit d'aspiration et comportant un démarreur pneumatique alimenté en air comprimé par un tube de démarrage, caractérisé en ce qu'il comporte une phase d'alimentation du démarreur pneumatique par l'air comprimé et une phase d'alimentation du réservoir par une partie de l'air comprimé circulant dans le tube de démarrage pour faire circuler du liquide de lubrification dans le conduit d'aspiration depuis le réservoir jusqu'à la pompe.

De préférence, le tube de démarrage comporte une vanne de démarrage qui est ouverte lors de la phase d'alimentation du démarreur pneumatique, et la phase d'alimentation du réservoir est mise en oeuvre lors de l'ouverture de la vanne de démarrage.

De préférence, le réservoir est alimenté en air comprimé par un conduit pneumatique comportant une vanne et relié au tube de démarrage, et a phase d'alimentation du réservoir est mise en oeuvre lors de l'ouverture de la vanne.

### BRÈVE DESCRIPTION DES DESSINS

[Fig. 1] est une représentation schématique en vue selon une direction axiale d'une turbomachine d'aéronef comportant un conduit d'aspiration traversant le bras de support disposé à 12h
[Fig. 2] est une représentation schématique d'une partie de la turbomachine montrant le circuit de lubrification combiné à un circuit d'air comprimé pour la mise en oeuvre de l'invention
[Fig. 3] est une représentation schématique d'une variante de réalisation de la partie de la turbomachine représentée à la figure 2.

### DESCRIPTION DÉTAILLÉE DE L'INVENTION

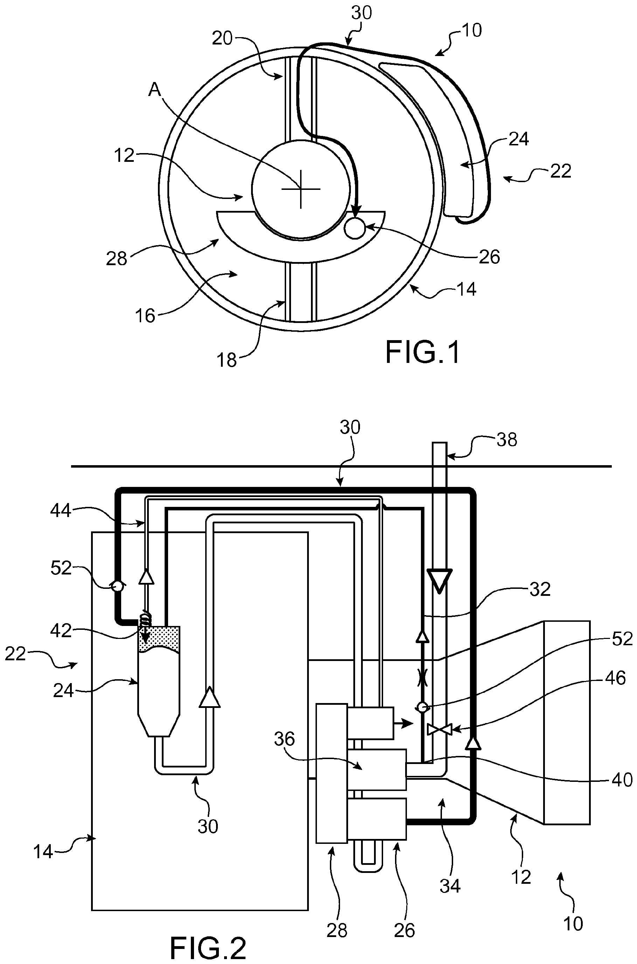

On a représenté à la figure 1 une turbomachine d'aéronef 10 comportant un axe principal A, un compartiment central 12 coaxial à l'axe principal A, communément appelé "compartiment core" et dans lequel les différents étages de compresseurs, la chambre de combustion et les turbines sont agencés, et un compartiment de soufflante 14 coaxial à l'axe principal A et au compartiment central 12 et s'étendant autour et à distance du compartiment central 12.

Un espace annulaire 16 est présent entre le compartiment central 12 et le compartiment de soufflante 14 et permet la circulation d'air dans la turbomachine 10.

La liaison entre le compartiment central 12 et le compartiment de soufflante 14 est notamment réalisé par des bras structuraux 18, 20 qui s'étendent selon une direction radiale relativement à l'axe principal A. Les bras structuraux 18, 20 sont munis d'un carénage profilé afin de limiter leur trainée aérodynamique et ainsi perturber le moins possible l'écoulement d'air au travers de l'espace annulaire 16.

En outre, les bras structuraux 18, 20 comportent des parties creuses pour permettre le passage de composants non structuraux, tels que par exemple des conduits, au travers de l'espace annulaire 16, sans interagir avec le flux d'air s'écoulant au travers de l'espace annulaire 16.

Les deux bras structuraux 18, 20 s'étendent aussi selon la direction verticale, lorsque la turbomachine 10 est montée sur un aéronef posé sur un sol horizontal et ils sont répartis verticalement de part et d'autre du compartiment central 12.

Un premier bras structural 18 est situé verticalement au-dessous du compartiment central 12, à la position communément désignée "6 heures", par analogie avec un cadran d'une horloge. Le deuxième bras structural 20 est situé verticalement au-dessus du compartiment central 12, à la position communément désignée "12 heures".

La turbomachine 10 comporte aussi un circuit de lubrification 22 destiné à fournir du liquide de lubrification à une pluralité de composants (non représentés) de la turbomachine 10, tels que par exemple des paliers de guidage en rotation d'un arbre.

Ce circuit de lubrification 22 comporte notamment un réservoir 24 de liquide de lubrification qui est porté par le compartiment de soufflante 14 et une pompe 26 qui est montée au niveau du compartiment central 12.

Plus particulièrement, la pompe 26 est montée dans un boitier d'entrainement d'accessoires 28 qui est accouplé à un arbre de la turbomachine et qui comporte une pluralité d'engrenages permettant de fournir différents rapports de transmission pour des équipements de la turbomachine 10 entraînés en rotation par le boitier d'entrainement d'accessoires 28, dont la pompe 26.

Le circuit de lubrification 22 comporte aussi un conduit d'aspiration 30 qui relie un orifice d'aspiration de la pompe 26 au réservoir 24 et par lequel la pompe 26 prélève le liquide de lubrification contenu dans le réservoir 24.

Puisque le réservoir 24 est monté sur le compartiment de soufflante 14 et la pompe 26 est montée sur le compartiment central 12, le conduit d'aspiration 30 traverse l'espace annulaire 16.

Le conduit d'aspiration 30 est ainsi monté au travers du deuxième bras structural 20 qui est situé à la position 12 heures, c'est à dire au-dessus du compartiment central 12. Comme on l'a dit précédemment, lorsque la turbomachine 10 est à l'arrêt, la pompe 26 n'aspire pas de liquide de lubrification depuis le réservoir 24. Puisque le conduit d'aspiration passe au travers du deuxième bras structural 20, il comporte un point haut au niveau de l'extrémité supérieure du deuxième bras structural 20.

Sous l'action de la gravité terrestre, le liquide de lubrification contenu dans le conduit d'aspiration 30 se vide alors dans le réservoir 24.

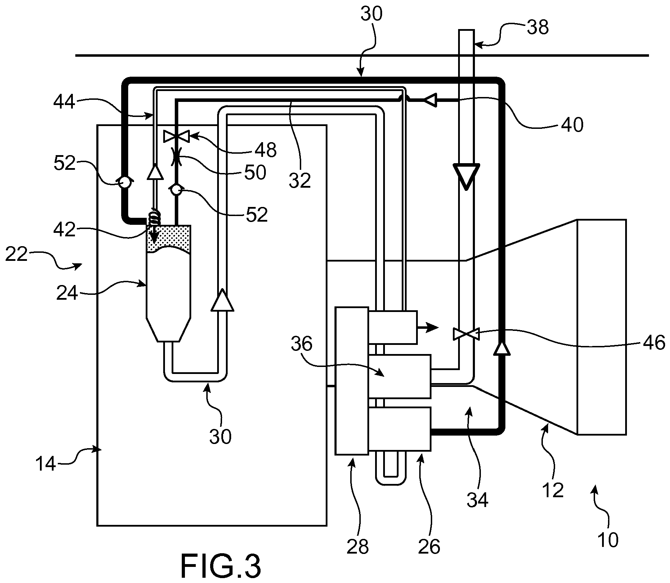

Pour réaliser le réamorçage du conduit d'aspiration 30 lors d'une phase de démarrage de la turbomachine, afin d'alimenter la pompe 26 rapidement, et comme on peut le voir aux figures 2 et 3, la turbomachine 10 comporte un conduit pneumatique 32 qui alimente le réservoir 24 en air comprimé lors de la phase de démarrage.

L'air comprimé force le liquide de lubrification contenu dans le réservoir 24 à circuler dans le conduit d'aspiration 30, franchissant le point haut du conduit d'aspiration 30, jusqu'à atteindre la pompe 26.

Une fois que le conduit d'aspiration 30 est rempli de liquide de lubrification, la pompe 26 peut alors aspirer seule le liquide contenu dans le réservoir 24.

Ce réamorçage du conduit d'aspiration 30 n'est nécessaire que lors d'une phase de démarrage de la turbomachine 10 car, à ce moment, le réservoir 24 n'est pas encore pressurisé.

Par la suite, lorsque la turbomachine est en fonctionnement, le réservoir 24 est continuellement pressurisé, par exemple et notamment par de l'air prélevé d'un étage de compresseur haute pression (HP) de la turbomachine.

Au moment du démarrage de la turbomachine 10, le compresseur haute pression ne fonctionne pas à un régime suffisamment important permettant de produire une pression de pressurisation du réservoir 24 qui permettrait de franchir la colonne verticale de liquide de lubrification entre le réservoir 24 et le point haut du conduit d'aspiration 30. L'air comprimé alimentant le réservoir 24 pendant la phase de démarrage provient d'un circuit pneumatique 34 de démarrage de la turbomachine 10 dont la source d'air comprimé (non représentée) est externe à la turbomachine 10. Par exemple cette source d'air est constituée par un compresseur d'une unité de puissance auxiliaire APU (Auxiliary Power Unit) de l'aéronef ou encore par une réserve d'air comprimé. Cette source externe d'air comprimé permet de fournir une pression d'air suffisamment importante pour pressuriser le réservoir 24.

Le circuit de démarrage 34 comporte un démarreur pneumatique 36 qui est monté sur le boitier d'entrainement d'accessoires 28, et un tube de démarrage 38 reliant la source d'air comprimé au démarreur.

Pour pressuriser le réservoir 24 à partir de l'air comprimé du circuit de démarrage 34, le conduit pneumatique 32 est relié au tube de démarrage 38 par un piquage 40 formé dans le tube de démarrage 38.

La pression de l'air dans le tube de démarrage, même en dehors de la phase de démarrage, est généralement de l'ordre de 3 à 4 bars, ce qui est largement suffisant pour vaincre la colonne verticale.

Un clapet de surpression 42 est agencé dans le réservoir 24 pour réguler la pression interne du réservoir 24 via un circuit de dégazage 44.

A titre d'exemple non limitatif, pour une valeur de colonne verticale de 2,5m, qui peut être considérée comme une référence, il faut alors une pression 0,25 bar pour vaincre cette colonne à -40°C.

Selon le mode de réalisation représenté à la figure 2, le piquage 40 est disposé en aval d'une vanne 46 de démarrage, c'est-à-dire entre la vanne de démarrage 46 et le démarreur 36. Cette disposition a pour avantage de ne pas pressuriser le réservoir 24 en dehors d'une phase de démarrage.

Selon le mode de réalisation représenté à la figure 3, le piquage 40 est disposé en amont de la vanne 46 de démarrage. Pour que la mise sous pression du réservoir 24 n'ait lieu que lors de la phase de démarrage, une vanne supplémentaire 48 est disposée dans le conduit pneumatique 32.

Cette disposition a pour avantage de permettre la mise sous pression du réservoir 24 même en dehors d'une phase de démarrage, dans le cas d'une défaillance par exemple. Quel que soit le mode de réalisation, la pression dans le tube de démarrage 38 peut être trop importante et gêner le fonctionnement de la pompe 26.

A cet effet, le conduit pneumatique 32 comporte une restriction 50 permettant de limiter la pression d'air alimentant le réservoir 24.

Aussi, des clapets anti retour 52 sont disposés dans le conduit d'aspiration 30 et le conduit pneumatique 32 afin d'éviter des circulations intempestives d'air ou de liquide de lubrification.

## Revendications

1. Turbomachine (10) d'aéronef comportant un circuit de lubrification (22) comprenant notamment un réservoir (24) de liquide de lubrification, une pompe (26) prélevant du liquide de lubrification depuis le réservoir (24) pour l'injecter vers plusieurs composants de la turbomachine (10) et un conduit d'aspiration (30) reliant le réservoir (24) à un orifice d'aspiration de la pompe (26),
la turbomachine (10) comportant en outre un circuit pneumatique de démarrage (34) comportant un tube de démarrage (38) dans lequel circule un flux d'air comprimé destiné à alimenter un démarreur pneumatique (36) de la turbomachine (10),
**caractérisée en ce qu'**elle comporte un conduit pneumatique (32) s'étendant depuis le tube de démarrage (38) jusqu'au réservoir (24) pour alimenter le réservoir (24) en air comprimé, afin de faire circuler le liquide de lubrification au travers du conduit d'aspiration (30) en direction de la pompe (26) lors du démarrage de la turbomachine.

2. Turbomachine selon la revendication 1, comportant une vanne de démarrage (46) disposée sur le tube de démarrage (38) et comportant un piquage (40) au niveau duquel le conduit pneumatique (32) est raccordé au tube de démarrage (38), le piquage (40) étant situé sur le tube de démarrage en amont de la vanne de démarrage (46).

3. Turbomachine selon la revendication 2, comportant une vanne supplémentaire (48) disposée sur le conduit pneumatique (32).

4. Turbomachine selon la revendication 1, comportant une vanne de démarrage (46) disposée sur le tube de démarrage (38) et comportant un piquage (40) au niveau duquel le conduit pneumatique (32) est raccordé au tube de démarrage (38), le piquage (40) étant situé sur le tube de démarrage en aval de la vanne de démarrage (46).

5. Turbomachine selon l'une quelconque des revendications précédentes, comportant un limiteur de pression situé dans le conduit pneumatique, afin de limiter la pression d'air dans le réservoir au démarrage.

6. Turbomachine selon l'une quelconque des revendications précédentes, comportant un compartiment central (12) coaxial à un axe principal (A) de la turbomachine (10), un compartiment de soufflante s'étendant autour et à distance du compartiment central (12) et coaxialement à l'axe principal (A) et des bras structuraux (18, 20) s'étendant radialement par rapport à l'axe principal (A) et verticalement selon la direction de la gravité terrestre, les bras structuraux étant répartis verticalement de part et d'autre du compartiment central (12) et reliant mécaniquement le compartiment central (12) au compartiment de soufflante (14),
dans laquelle le conduit d'aspiration s'étend au travers d'un bras structural (20) situé verticalement au-dessus du compartiment central (12).

7. Turbomachine selon la revendication 6, la pompe (26) étant montée sur le compartiment central (12) et le réservoir (24) étant monté sur le compartiment de soufflante (14).

8. Procédé de démarrage d'une turbomachine selon l'une quelconque des revendications précédentes, comportant une pompe (26) de liquide de lubrification, un réservoir de liquide de lubrification (24) relié à la pompe (26) par un conduit d'aspiration (30) et comportant un démarreur pneumatique (36) alimenté en air comprimé par un tube de démarrage (38),
**caractérisé en ce qu'**il comporte une phase d'alimentation du démarreur pneumatique (36) par l'air comprimé et une phase d'alimentation du réservoir (24) par une partie de l'air comprimé circulant dans le tube de démarrage (38) pour faire circuler du liquide de lubrification dans le conduit d'aspiration (30) depuis le réservoir jusqu'à la pompe (26).

9. Procédé selon la revendication 8, dans lequel le tube de démarrage (38) comporte une vanne de démarrage (46) qui est ouverte lors de la phase d'alimentation du démarreur pneumatique (36), **caractérisé en ce que** la phase d'alimentation du réservoir (24) est mise en oeuvre lors de l'ouverture de la vanne de démarrage (46).

10. Procédé selon la revendication 8, dans lequel le réservoir est alimenté en air comprimé par un conduit pneumatique comportant une vanne (48) et relié au tube de démarrage (38),
**caractérisé en ce que** la phase d'alimentation du réservoir (24) est mise en oeuvre lors de l'ouverture de la vanne (48).

## Patentansprüche

1. Turbomaschine (10) eines Flugzeugs, umfassend einen Schmierkreislauf (22), der insbesondere einen Tank (24) für Schmierflüssigkeit aufweist, eine Pumpe (26), die Schmierflüssigkeit aus dem Tank (24) entnimmt, um sie in mehrere Komponenten der Turbomaschine (10) einzuspeisen, und eine Ansaugleitung (30), die den Tank (24) mit einer Ansaugöffnung der Pumpe (26) verbindet,
wobei die Turbomaschine (10) ferner einen pneumatischen Startkreislauf (34) umfasst, der ein Starterrohr (38) umfasst, in dem ein Druckluftstrom zirkuliert, der dazu bestimmt ist, einen pneumatischen Starter (36) der Turbomaschine (10) zu versorgen,
**dadurch gekennzeichnet, dass** sie eine pneumatische Leitung (32) umfasst, die sich vom Starterrohr (38) bis zum Tank (24) erstreckt, um den Tank (24) mit Druckluft zu versorgen, um beim Starten derTurbomaschine die Schmierflüssigkeit durch die Ansaugleitung (30) in Richtung der Pumpe (26) zirkulieren zu lassen.

2. Turbomaschine nach Anspruch 1, umfassend ein Startventil (46), das auf dem Starterrohr (38) angeordnet ist, und eine Abzweigvorrichtung (40), auf deren Höhe die pneumatische Leitung (32) mit dem Starterrohr (38) verbunden ist, wobei sich die Abzweigvorrichtung (40) am Starterrohr stromaufwärts des Startventils (46) befindet.

3. Turbomaschine nach Anspruch 2, umfassend ein zusätzliches Ventil (48), das an der pneumatischen Leitung (32) angeordnet ist.

4. Turbomaschine nach Anspruch 1, umfassend ein Startventil (46), das auf dem Starterrohr (38) angeordnet ist, und eine Abzweigvorrichtung (40), auf deren Höhe die pneumatische Leitung (32) mit dem Starterrohr (38) verbunden ist, wobei sich die Abzweigvorrichtung (40) am Starterrohr stromabwärts des Startventils (46) befindet.

5. Turbomaschine nach einem der vorhergehenden Ansprüche, umfassend einen in der pneumatischen Leitung befindlichen Druckbegrenzer, um den Luftdruck im Tank beim Start zu begrenzen.

6. Turbomaschine nach einem der vorhergehenden Ansprüche, umfassend eine zentrale Kammer (12), die koaxial zu einer Hauptachse (A) der Turbomaschine (10) ist, eine Gebläsekammer, die sich um die zentrale Kammer (12) herum und in einem Abstand von dieser und koaxial zu der Hauptachse (A) erstreckt, und Strukturarme (18, 20), die sich radial in Bezug auf die Hauptachse (A) und vertikal in Richtung der Erdanziehungskraft erstrecken, wobei die Strukturarme vertikal auf beiden Seiten der zentralen Kammer (12) verteilt sind und die zentrale Kammer (12) mechanisch mit der Gebläsekammer (14) verbinden,
wobei sich die Ansaugleitung durch einen Strukturarm (20) erstreckt, der sich vertikal über der zentralen Kammer (12) befindet.

7. Turbomaschine nach Anspruch 6, wobei die Pumpe (26) an der zentralen Kammer (12) montiert ist und der Tank (24) an der Gebläsekammer (14) montiert ist.

8. Verfahren zum Starten einer Turbomaschine nach einem der vorhergehenden Ansprüche, umfassend eine Pumpe (26) für Schmierflüssigkeit, einen Tank für Schmierflüssigkeit (24), der mit der Pumpe (26) durch eine Ansaugleitung (30) verbunden ist, und einen pneumatischen Starter (36), der von einem Starterrohr (38) mit Druckluft versorgt wird,
**dadurch gekennzeichnet, dass** es eine Phase der Versorgung des pneumatischen Starter (36) mit Druckluft und eine Phase der Versorgung des Tanks (24) mit einem Teil der durch das Starterrohr (38) zirkulierenden Druckluft umfasst, um die Schmierflüssigkeit in der Ansaugleitung (30) vom Tank bis zur Pumpe (26) zirkulieren zu lassen.

9. Verfahren nach Anspruch 8, bei dem das Starterrohr (38) ein Startventil (46) umfasst, das während der Phase der Versorgung des pneumatischen Starters (36) geöffnet ist, **dadurch gekennzeichnet, dass** die Phase der Versorgung des Tanks (24) bei geöffnetem Startventil (46) durchgeführt wird.

10. Verfahren nach Anspruch 8, bei dem der Tank mit Druckluft durch eine pneumatische Leitung versorgt wird, die ein Ventil (48) umfasst und mit dem Starterrohr (38) verbunden ist,
**dadurch gekennzeichnet, dass** die Phase der Versorgung des Tanks (24) bei geöffnetem Ventil (48) durchgeführt wird.

## Claims

1. An aircraft turbomachine (10) including a lubricating circuit (22) comprising in particular a lubricating liquid tank (24), a pump (26) drawing lubricating liquid from the tank (24) to inject it onto several components of the turbomachine (10) and a suction pipe (30) connecting the tank (24) to a suction orifice of the pump (26),
the turbomachine (10) further including a start-up pneumatic circuit (34) including a start-up tube (38) in which a compressed air flow circulates intended to supply a pneumatic starter (36) of the turbomachine (10), **characterised in that** it includes a pneumatic pipe (32) extending from the start-up tube (38) up to the tank (24) to supply the tank (24) with compressed air, in order to make the lubricating liquid circulate throughout the suction pipe (30) in the direction of the pump (26) upon start-up of the turbomachine.

2. The turbomachine according to claim 1, including a start-up valve (46) disposed on the start-up tube (38) and including a tapping (40) at which the pneumatic pipe (32) is connected to the start-up tube (38), the tapping (40) being located on the start-up tube upstream of the start-up valve (46).

3. The turbomachine according to claim 2, including an additional valve (48) disposed on the pneumatic pipe (32).

4. The turbomachine according to claim 1, including a start-up valve (46) disposed on the start-up tube (38) and including a tapping (40) at which the pneumatic pipe (32) is connected to the start-up tube (38), the tapping (40) being located on the start-up tube downstream of the start-up valve (46).

5. The turbomachine according to any one of the preceding claims, including a pressure limiter located in the pneumatic pipe, in order to limit the air pressure in the tank on start-up.

6. The turbomachine according to any one of the preceding claims, including a central compartment (12) coaxial with a main axis (A) of the turbomachine (10), a fan compartment extending around and at a distance from the central compartment (12) and coaxially with the main axis (A) and structural arms (18, 20) extending radially with respect to the main axis (A) and vertically according to the direction of Terrestrial gravity, the structural arms being distributed vertically on either side of the central compartment (12) and mechanically linking the central compartment (12) to the fan compartment (14), wherein the suction pipe extends throughout a structural arm (20) located vertically above the central compartment (12) .

7. The turbomachine according to claim 6, the pump (26) being mounted on the central compartment (12) and the tank (24) being mounted on the fan compartment (14).

8. A method for starting up a turbomachine according to any one of the preceding claims, including a lubricating liquid pump (26), a lubricating liquid tank (24) connected to the pump (26) through a suction pipe (30) and including a pneumatic starter (36) supplied with compressed air through a start-up pipe (38), **characterised in that** it includes a phase of supplying the pneumatic starter (36) with compressed air and a phase of supplying the tank (24) with a portion of the compressed air in the start-up tube (38) to make lubricating liquid circulate in the suction pipe (30) from the tank up to the pump (26).

9. The method according to claim 8, wherein the start-up tube (38) includes a start-up valve (46) which is open during the phase of supplying the pneumatic starter (36), **characterised in that** the phase of supplying the tank (24) is implemented upon opening of the start-up valve (46) .

10. The method according to claim 8, wherein the tank sis supplied with compressed air through a pneumatic pipe including a valve (48) and connected to the start-up tube (38),
**characterised in that** the phase of supplying the tank (24) is implemented upon opening of the valve (48).
